# EUROPÄISCHE PATENTSCHRIFT

(11) **EP 2 859 539 B1**
(45) Veröffentlichungstag und Bekanntmachung des Hinweises auf die Patenterteilung: **25.07.2018**
(21) Anmeldenummer: 13727940.2
(22) Anmeldetag: 12.06.2013
(51) Int. Cl.: G08B 13/12, G08B 13/14, G02B 6/44, G02B 6/35, H04B 10/071, H04Q 11/00

(54) **STROMLOSER, OPTISCHER SCHALTER**
CURRENTLESS OPTICAL SWITCH
INTERRUPTEUR OPTIQUE SANS COURANT

(30) Priorität: 12.06.2012 LU 92020 P
(43) Veröffentlichungstag der Anmeldung: 15.04.2015
(73) Patentinhaber: Loos, Guy, 3323 Bivange (LU)
(72) Erfinder: Loos, Guy, 3323 Bivange (LU)
(74) Vertreter: Office Freylinger
(86) Internationale Anmeldenummer: PCT/EP2013/062108
(87) Internationale Veröffentlichungsnummer: WO 2013/186245

(56) Entgegenhaltungen:
- EP-A1- 2 725 724
- WO-A2-2004/100095
- JP-A- 2000 329 861
- JP-A- 2001 194 115
- US-A1- 2006 071 770
- US-A1- 2009 040 046

## Beschreibung

### Technisches Gebiet

Die vorliegende Erfindung betrifft allgemein einen stromlosen, optischen Schalter, welcher einen Schaltungszustand übermittelt. Der Schalter kann überall angewendet werden, wo stromlos ein Schaltungszustand übermittelt werden soll. Er kann sowohl zum Überwachen von Zugangsschächten oder -türen zu Infrastrukturen der Telekommunikation, der Gas-, Wasser-, Abwasser- und Stromversorgung als auch zum Sichern von Schächten und Türen zu Trinkwasserreservoirs oder -verteilern sowie zu Sicherheitsinfrastrukturen und Sicherheitsgangsystemen des zivilen und militärischen Bereichs eingesetzt werden. Darüber hinaus beschreibt die Erfindung eine Vorrichtung die eine zuverlässige Erfassung mehrerer Schalter ermöglicht.

### Stand der Technik

Ziel ist es einen mechanischen, stromlosen, optischen Schalter zu entwickeln, der überall dort eingesetzt werden kann, wo Zugänge zu Schlüsselinfrastrukturen geschützt bzw. überwacht werden müssen. Zu solchen Schlüsselstrukturen gehören nebst Telekommunikationsschächten auch Schächte und Zugangstüren der Gas-, Wasser- und Stromversorgung, welche gegen unerlaubten Zutritt gesichert werden müssen. Oft befinden sich solche Schächte im Untergrund und sind durch einen Schachtdeckel verschlossen. Der Mehrzweckschalter soll in den Schächten angebracht werden um den Öffnungszustand des jeweiligen Schachtdeckels zu überwachen.

Des Weiteren soll der Schalter es auch ermöglichen Zugänge zu Technik- bzw. Hochsicherheitsräumen oder -Containern zu überwachen, und zusätzlich, in Verbindung mit einem Schwimmer, z.B. die Flutung eines Schachts oder einer Gebäudeebene anzuzeigen.

Aus dem US Patent US7109873 B2 geht ein Schalter hervor, welcher das Öffnen eines Schachtdeckels erfassen kann. In einer Ausgestaltung dieses Schalters ist im Schalter ein Stift verschiebbar angeordnet, der mit einer Feder vorgespannt ist und von innen gegen den verschlossenen Schachdeckel drückt. Wird der Schachtdeckel geöffnet, verschiebt sich der Stift und verbiegt einen optischen Leiter (Glasfaser), der am Stift befestigt ist. Alternativ kann das Verbiegen des optischen Leiters (Glasfaser) beim Öffnen des Schachtdeckels über Magnete ausgelöst werden. Hierzu ist es notwendig einen ersten Magneten am Schachtdeckel zu befestigen, welcher einen zweiten, mit einer Feder vorgespannten Magneten, bei geschlossenem Schachtdeckel anzieht. Beim Öffnen des Schachtdeckels wird die Vorspannung aufgehoben und der Schalter löst aus. Beim Auslösen wird eine Glasfaser über einen mit dem zweiten Magneten gekoppelten Keilstift ausgelenkt und verbogen.

Die Biegung (Knick) des optischen Leiters wird mit Hilfe der optischen Zeitbereichsreflektometrie (OTDR) anhand eines Messgerätes erfasst. Hierzu wird ein OTDR-Messgerät an den optischen Leiter angeschlossen, das pro Messung einen Lichtpuls durch den optischen Leiter sendet und die Intensität des Rückstreulichts über die Zeit misst. Liegt im optischen Leiter eine Biegung vor, so wird die Totalreflektion des Lichtes im optischen Leiter aufgehoben und es tritt Licht aus dem optischen Leiter aus. Anhand der Messung des Rückstreulichts über die Zeit kann nicht nur ermittelt werden wie viel, sondern auch wo die Lichtintensität durch die temporäre Dämpfung verloren gegangen ist. Da es sich bei der Messung um eine gepulste Messung handelt welche Lichtpulse in verschiedenen Zeitabständen aussendet, und da die Glasfaser eine gewisse Zeit benötigt um die Ausgangsposition wieder einzunehmen, kann der Schaltzustand des Schalters in der Zeit zwischen zwei Lichtpulsen nicht überprüft werden. Wird der Schalter nur sehr kurz ausgelöst, wird die Auslösung nicht zuverlässig erkannt.

Aus dem Dokument WO-2004/100095 geht ein Schalter hervor, welcher mit einem optischen Faserstrang und einem optischen Zeitbereichsreflektometrie- Messgerät betrieblich gekoppelt ist und welcher eine Auslösevorrichtung und eine verzögerte Rückstellmechanismus aufweist.

### Aufgabe der Erfindung

Eine Aufgabe der vorliegenden Erfindung ist es, einen stromlosen optischen Schalter bereitzustellen, der eine zuverlässige Detektion der Auslösungen, unabhängig von der zeitlichen Dauer der jeweiligen Auslösung ermöglicht. Diese Aufgabe wird durch einen Schalter nach Anspruch 1 gelöst.

### Allgemeine Beschreibung der Erfindung

Die Erfindung betrifft insbesondere einen Schalter, der rein mechanisch und ohne Strom mittels eines optischen Leiters wie beispielsweise einer Glasfaser als Übertragungsmedium einen Schaltzustand übermittelt. Unter dem Begriff Schalter kann des Weiteren eine Schalteinrichtung sowie ein Mehrzweckschalter verstanden werden. Dabei macht das System sich die Eigenschaften von lichtleitenden, biegeempfindlichen optischen Leitern zu Nutze, und speziell die Tatsache, dass beim Knicken oder Verbiegen derartiger optischer Leiter an dem Knick- bzw. Biegepunkt Licht austritt.

Die erfindungsgemäße abfragbare Schalteinrichtung umfasst ein Gehäuse, sowie einen in dem Gehäuse angeordneten optischen Leiter und eine in dem Gehäuse angeordnete Auslenkvorrichtung für den optischen Leiter. Die Schalteinrichtung umfasst weiterhin eine Auslösevorrichtung, die einen Schaltvorgang der Schalteinrichtung einleitet und die Auslenkvorrichtung zumindest zeitweise betätigt. Die Auslenkvorrichtung ist derart ausgestaltet, dass der optische Leiter bei Betätigung der Auslösevorrichtung in einer definierten Art und Weise durch die Auslenkvorrichtung ausgelenkt wird, so dass sich der Biegeradius des optischen Leiters definiert ändert. Die abfragbare Schalteinrichtung weist zusätzlich einen Rückstellmechanismus für die Auslenkvorrichtung auf, welcher eine Rückstellverzögerung aufweist, die die Auslenkvorrichtung nach dem Rückstellen der Auslösevorrichtung mit einer definierten Verzögerung in ihre Ausgangslage zurückführt.

Nach einer bevorzugten Ausgestaltung der Erfindung wird der optische Leiter im Inneren des Schalters an einem sich auf einem beweglichen Schieber befindenden Mitnehmer vorbei geführt. Beim Betätigen des Auslösemechanismus lenkt der Mitnehmer den optischen Leiter aus seiner Ruhelage aus wobei durch die resultierende Verbiegung des Leiters eine temporäre Dämpfung der Lichtleit- und Reflektionsfähigkeit des optischen Leiters auftritt. Diese Dämpfung wird von einem Messinstrument erfasst und die entsprechende Information an ein georeferenziertes Auswerteprogramm übermittelt, welches die exakte Lage des betroffenen Schalters ermittelt. Grundsätzlich kann der erfindungsgemäße Schalter in jedem Umfeld eingesetzt werden, um einen Schaltzustand zu übermitteln. Da es beim erfindungsgemäßen Schalter zu keiner Entwicklung von Reibungswärme oder zu Funkenschlag kommt, empfiehlt sich ein Einsatz ebenfalls in hoch-explosivem oder hoch-brennbarem, bzw. hoch-korrosivem Umfeld. Da der erfindungsgemäße Schalter völlig stromlos funktioniert, ist er prädestiniert um an Standorten eingesetzt zu werden, an denen die Zuführung von Strom problematisch ist. Des Weiteren werden keine Magnete eingesetzt, weshalb der Schalter unempfindlich gegenüber magnetischen Feldern ist. Auch entfällt die Kombination mit teuren und störungsanfälligen TK-Modulen wie GSM oder GPRS, welche z.B. mit Hilfe von Störgeräten (wie bspw. Frequency-Jammer) sabotiert werden können.

Die Rückstellung des Auslösemechanismus erfolgt vorzugsweise über eine Verzögerung, die sicherstellt dass die Auslösung auch vom Messgerät erfasst wird. Diese Rückstellverzögerung hat des weiteren 2 wesentliche Vorteile: 1) sie erlaubt es, mehrere sternförmige Faserstränge (wobei ein Faserstrang einen optischen Leiter sowie die daran betrieblichen gekoppelten Schalter bezeichnet) sequentiell und mit nur einem Messinstrument zu erfassen; 2) kurze Schaltsequenzen werden dennoch, dank der Rückstellungsverzögerung, sicher erfasst.

Es ist anzumerken, dass der erfindungsgemäße Schalter in einer einfachen Ausgestaltung derart ausgelegt werden kann, dass ein binärer Schaltzustand übermittelt wird. In diesem Fall wird lediglich zwischen zwei Zuständen "0" (Schalter im Ruhezustand) und "1" (Schalter ausgelöst) unterschieden. Bei einem solchen "binären" Schalter wird die Faser, nach Ablauf der Rückstellzeit, in Sekundenbruchteilen mechanisch in die Ausgangsposition gebracht. Dies führt zu dem binären Schaltzustand: offen oder geschlossen. In einer alternativen Ausgestaltung kann der Schalter aber auch derart ausgelegt werden, dass eine graduelle Rückstellung über die Zeit detektierbar ist. In der Tat kann es je nach Anwendung interessant sein, den Übergang von dem Zustand "0" auf den Zustand "1" bzw. von dem Zustand "1" auf den Zustand "0" über die Zeit, d.h. mit sich verändernden Dämpfungswerten, zu messen bzw. zu erfassen.

Der erfindungsgemäße Schalter ist wasserdicht und, in seiner schweren Ausführung für den Außenbereich, mindestens IP 68 geschützt und mindestens schlagfest bis zu einer Schlagkraft von 10 Joule.

Nach einer alternativen Ausgestaltung kann der Schalter über einen Fernauslöser, wie beispielsweise einen Bowdenzug mit Festdraht, zur Auslösung gebracht werden. Demnach muss die physische Nähe zwischen Schalter und Schachtdeckel, im Falle eines Schachtdeckelüberwachungssystems, nicht zwingend gegeben sein.

In einer bevorzugten Ausgestaltung ist der Schalter von seiner Bauweise her so ausgelegt, dass er sabotageunempfindlich ist. Bei Sabotageversuchen löst der Schalter automatisch aus. Auch bei Materialdefekt löst der vorliegende Schalter unverzüglich aus. Als Materialdefekt kann z.B. der Bruch einer fehlerhaften Glasfaser im Schalter gelten, welche auch als "Bruch" erkannt wird. Auf diese Art erfüllt der Schalter, dank seiner hohen Verlässlichkeit, auch eine Selbsttestfunktion: der Schalter ist, wenn er nicht ausgelöst hat, 100% funktionsfähig.

Der vorgeschlagene Schalter ist wartungsfrei und hat einen Einsatzbereich zwischen -20° und +40 Grad Celsius. Je nach Ausführung des Schalters kann dieser Temperaturbereich auch erweitert werden.

Nach einer bevorzugten Ausgestaltung der Erfindung wird der optische Leiter im Gehäuse von Führungselementen entlang einer kreisförmigen Bahn geführt. Der Biegeradius mit dem der optische Leiter im Gehäuse geführt wird ist in unbetätigtem Zustand größer oder gleich dem Mindestbiegeradius des optischen Leiters. Somit ist eine kompakte Gehäusegestaltung des Schalters möglich. Die Auslenkvorrichtung umfasst einen Mitnehmer, welcher bei Betätigung der Auslenkvorrichtung den optischen Leiter in eine definierte Richtung auslenkt, so dass der Biegeradius des optischen Leiters wenigstens an einer Stelle temporär verkleinert wird. Der Biegeradius des in der Auslenkvorrichtung befindlichen optischen Leiters ist in betätigtem Zustand kleiner als der Mindestbiegeradius des optischen Leiters.

Des Weiteren kann die Rückstellverzögerung entweder als Uhrwerk oder als hydraulische Lamellenbremse ausgeführt sein. Unter dem Begriff einer hydraulischen Lamellenbremse ist eine Bremsvorrichtung zu verstehen, welche ein Lamellenpaket mit mindestens zwei Bremsflächen aufweist, die in einer hochviskosen Flüssigkeit aufeinandergepresst werden. Solch eine Bremse hat im Vergleich zu einer herkömmlichen Reibungsbremse den Vorteil, dass die Rückstellbewegung wesentlich länger andauert. Somit lassen sich längere Verzögerungszeiten erreichen, was in komplexen Netzwerktopologien von Vorteil ist.

Der optische Leiter kann so in das Gehäuse eingelegt werden, dass er in das Gehäuse eintritt und das Gehäuse wieder verlässt. Demnach kann der optische Leiter durch mehrere Schalter (ähnlich der Anordnung einer herkömmlichen Reihenschaltung) hindurch verlegt werden. Zum Auslesen des Faserstrangs wird ein OTDR-Messgerät wenigstens an einem Ende der Faser angeschlossen. Mit dieser Anordnung der Schalter entlang eines Faserstrangs können pro Faserstrang die Schaltzustände von beispielsweise bis zu 12 Schaltern zuverlässig überwacht werden, wodurch die Installationskosten solch einer Vorrichtung deutlich reduziert werden können.

Nach einer bevorzugten Anordnung von optischem Leiter und Schalter wird der optische Leiter so in das Gehäuse eingelegt, dass er in das Gehäuse eintritt und im Gehäuse endet. Der im Gehäuse angeordnete optische Leiter kann mit einem LC/PC-Stecker oder einem als Reflektor ausgelegten Stecker enden. Bei dieser Anordnung wird die betriebliche Kopplung der Schalter durch einen Strahlteiler ermöglicht, der vor jedem Schalter z.B. in einer Muffe angeordnet ist. Jeder Strahlteiler zweigt einen bestimmten Anteil der Lichtmenge des optischen Leiters ab und leitet diesen an den Schalter weiter. Mit solch einer Anordnung wird die Lichtmenge besser auf die Schalter verteilt. Demnach können pro optischen Leiter die Schaltzustände von mehr als 150 Schaltern in Abhängigkeit der Leistung des OTDR-Messgerätes zuverlässig ausgelesen werden, wodurch die Installationskosten weiter gesenkt werden können. Die durch Faserbiegung in einem Schalter ausgelöste temporäre Dämpfung beeinflusst dabei die messtechnische Erfassung der restlichen Schalter nicht.

Zu Erhöhung der Sicherheit können mehrere OTDR-Messgeräte, besonders bevorzugt zwei OTDR-Messgeräte, verwendet werden, wobei ein OTDR-Messgerät antizyklisch misst und insofern mit dem zweiten Messgerät synchronisiert wird, dass sichergestellt ist, dass zu keiner Zeit beide Geräte den gleichen Faserstrang messen.

Es ist weiterhin anzumerken, dass bei einem Faserbruch z.B. zwischen Schalter 7 und Schalter 8 eines Faserstrangs, das Messgerät, welches von Schalter 1 aus misst, ab Schalter 7 "blind" ist. Eine Messung aus entgegengesetzter Richtung ist nicht möglich da die Strahlteiler lediglich unidirektional funktionieren. Um in einem solchen Fall trotz Faserbruch alle Schalter eines Faserstrangs ausmessen zu können ist es vorteilhaft, wenn mittels eines zweiten Messgeräts auf einer zweiten, "parallelen" Faser in entgegengesetzter Richtung gemessen werden kann. Die zweite Faser muss in diesem Fall wiederum durch jeden Schalter durchlaufen bzw. in jeder Muffe über einen Strahlteiler an den jeweiligen Schalter angeschlossen sein. Durch die Messung in entgegengesetzter Richtung in der zweiten Faser lassen sich in diesem Fall auch die Schalter auslesen, die von dem ersten Messgerät aus gesehen hinter dem Faserbruch liegen.

### Beschreibung der Figuren

Im Folgenden werden nun verschiedene Ausgestaltungen der Erfindung anhand der beiliegenden Figuren beschrieben.
Fig.1 ist eine schematische Schnittdarstellung der ersten Ebene einer bevorzugten Ausführung des Schalters.
Fig.2 ist eine schematische Schnittdarstellung der zweiten Ebene einer bevorzugten Ausführung des Schalters.
Fig.3 ist eine schematische Schnittdarstellung der dritten Ebene einer bevorzugten Ausführung des Schalters.
Fig.4 ist eine erste schematische Darstellung einer bevorzugten Anordnung von Strahlteiler, Schalter und Messgerät.
Fig.5 ist eine zweite schematische Darstellung einer möglichen Schalteranordnung.

### Detaillierte Beschreibung anhand der Figuren

Funktionsprinzip: Eine biegeempfindliche Glasfaser, z.B. des Typs G652, wird in den erfindungsgemäßen Schalter eingeführt und, unter Beachtung des Mindestbiegeradius des jeweiligen Fasertyps um einen beweglichen Mitnehmer geführt. Bei Betätigung des Schalters [z.B. durch Anheben eines Schachtdeckels, der mit dem Auslösemechanismus verbunden ist] wird die Glasfaser durch den beweglichen Mitnehmer geknickt bzw. verbogen. Dadurch wird die Totalreflektion des Lichtes in der Glasfaser aufgehoben und es tritt Licht aus der Glasfaser aus. Dieses fehlende Licht kann mit einem speziellen OTDR-Messinstrument *(optical time-domain reflectometer)* gemessen und eindeutig, mittels einer Software, einem spezifischen Schalter zugewiesen werden. In der Rückstreukurve liefert jeder Schalter einen charakteristischen Signalpeak, dessen Position durch die Streckenlänge zwischen Schalter und OTDR-Messgerät festgelegt ist. Beim Aufbau eines Netzes an Schaltern mit den ihnen zugeordneten Strahlteilern, ergibt sich durch die Überlagerung der Einzelpeaks ein charakteristisches Gesamtbild (vergleichbar mit dem eines Fingerabdrucks) welches bei Inbetriebnahme des Schalternetzes erfasst, gespeichert und bei jeder späteren Messung als Referenzbild verwendet wird. Die Rückstellung der Glasfaser erfolgt mechanisch durch einen Mitnehmer, welcher die Glasfaser zurück in ihre Ausgangsposition bewegt.

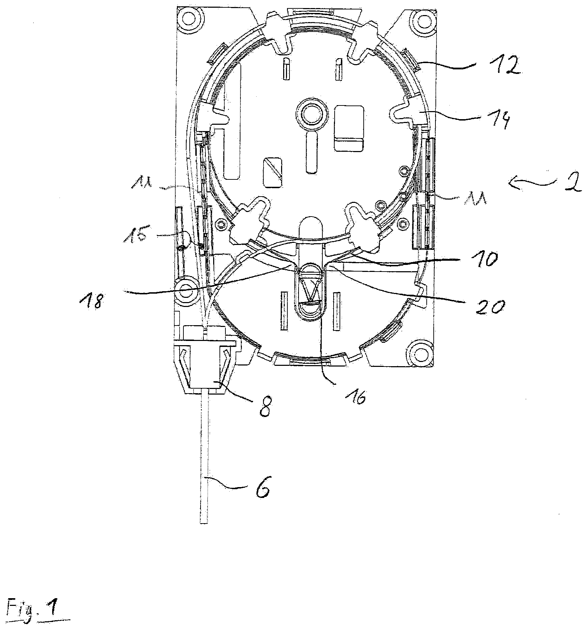

In Fig.1, Fig.2 und Fig.3 ist ein bevorzugter Schalter 2 dargestellt, welcher sich im ausgelösten Zustand befindet. Das Gehäuse 4 dieses Schalters 2 konnte durch eine geschichtete Anordnung der schaltinternen Mechanik in mehreren Ebenen kompakt gestaltet werden. Fig.1 entspricht der ersten Ebene des Schalters 2, in der eine biegeunempfindliche Glasfaser 6 des Typs G657 oder G652, G655 oder eine mit dem G652-Standard kompatible Faser über eine Klemme 8 gegen Zug entlastet wird und innerhalb des Gehäuses 4 mit einer biegeempfindlichen Glasfaser 10 des Typs G652 verspleißt ist. Die biegeempfindliche Glasfaser 10 wird in mehreren Schlaufen im Gehäuse von Führungselementen gehalten. Die Führungsleisten 12 und Führungsnasen 14 gewährleisten eine stabile Führung der Glasfaser und ein Einhalten des Mindestbiegeradius. Ein Krimpspleißschutz schützt den Spleiß und wird in einer Längsnut zwischen zwei Stegen im Schalter 2 eingeklemmt. Eine der Schlaufen der biegeempfindlichen Glasfaser 10 wird an dem Mitnehmer 16 der Auslenkvorrichtung vorbeigeführt, welcher beim Auslösen des Schaltvorgangs die Glasfaser 10 nach unten ablenkt und an zwei abgerundeten Kanten 18, 20 des Gehäuses 2 jeweils um einen Winkel von ungefähr 90° biegt.

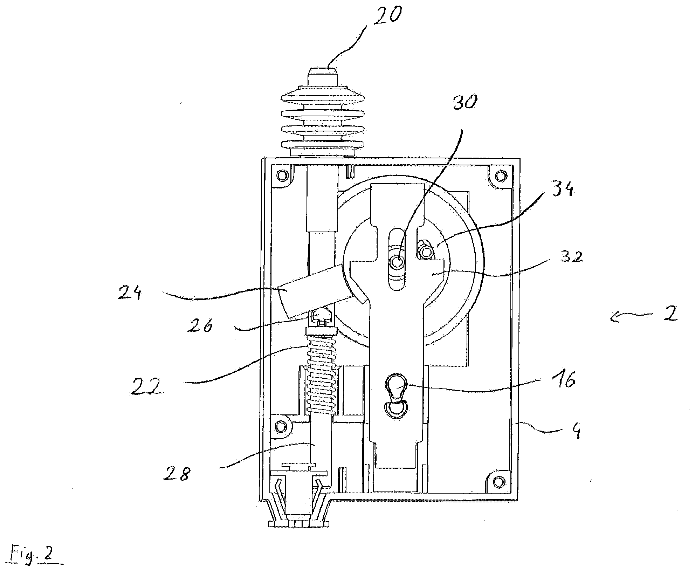

Die in Fig.2 gezeigte Auslöse- und Auslenkvorrichtung befindet sich in der zweiten Ebene des Schalters 2. Die Auslösevorrichtung ist als Druckschalter 20 ausgeführt welcher zum Beispiel durch Anheben eines durch den Schalter 2 gesicherten Schachtdeckels auslöst. Durch die Auslösung wird die Schraubfeder 22 entlastet und der Aufzughebel 24 über einen Vorsprung 26 an der Hubstange 28 betätigt. Der um die Achse 30 drehbar gelagerte Aufzughebel 24 betätigt den Schieber 32 an dem der Mitnehmer 16 angebracht ist über einen Stift 25. Gleichzeitig wird über den Aufzughebel 24 die Rückstellverzögerung 34 ausgelöst, welche den Mitnehmer 16 erst nach einer vorbestimmten, einstellbaren Zeit zurückstellt. Somit wird gewährleistet, dass selbst eine kurze Betätigung der Hubstange 28 als Auslösung erkannt wird. Ohne Rückstellverzögerung 34 würde ein Anheben des Schachtdeckels und kurz darauf [innerhalb von Sekunden oder sogar noch kleineren Zeitabständen] ein Absenken desselben die Hubstange 28 herunterdrücken, die Schraubfeder 22 komprimieren und die Auslenkvorrichtung sofort in die Ausgangsposition zurücksetzen. Es wäre dann technisch kaum möglich, die Auslösung effizient und kostengünstig zu messen.

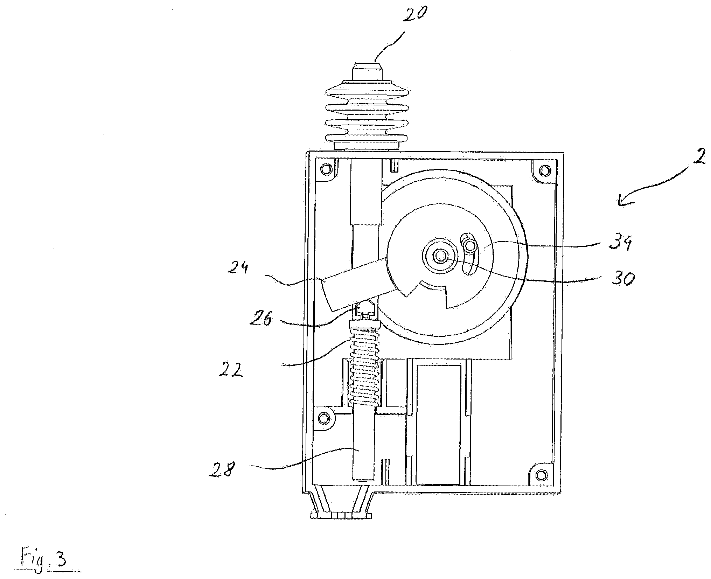

Fig.3 entspricht der Ebene in der die Rückstellverzögerung 34 angeordnet ist. Wie zuvor beschrieben, erfüllt die Rückstellverzögerung 34 den Zweck, die Rückstellung des Schalters 2 zu verzögern, so dass die Auslösung zweifelsfrei von einem Messgerät erfasst werden kann. Dabei ist die Verzögerungszeit individuell einstellbar. Der Verzögerungsmechanismus kann beispielsweise als Uhrwerk oder als federbetriebenes Lamellenpaket, welches sich in einer als Bremsmittel dienenden hochviskosen und temperaturunempfindlichen Flüssigkeit bewegt, ausgelegt werden.

Messungen werden von ein- und demselben Messgerät sequenziell durchgeführt (dies ist ein Grund für die Notwendigkeit einer Rückstellverzögerung 34). Messungen von Strecken bis zu einer Länge von 80-90 km sind dabei möglich. Bei komplexeren Netzwerktopologien erfolgt die Messung sternförmig. Die Anzahl von möglichen Schaltern pro Faserstrang hängt lediglich von der Auflösung und Dynamik des Messgerätes und der Eigendämpfung des Faserstranges ab. Die sequenzielle bzw. sternförmige Messung reduziert die Anzahl der notwendigen Messgeräte und entsprechend die Gesamtkosten für die Überwachung. Der Verzögerungsmechanismus dient ebenfalls der Selbstkontrolle des Schalters, da ein Defekt der Rückstellverzögerung den Schalter ebenfalls auslöst.

Der Schalter 2 kann ebenfalls, mit einem Schwimmer versehen, u.a. als Druck-, Füllstands- oder Flutungsdetektor angewendet werden. In diesem Fall kann, je nach Anwendungsgebiet, die Rückstellverzögerung entfallen oder überbrückt werden.

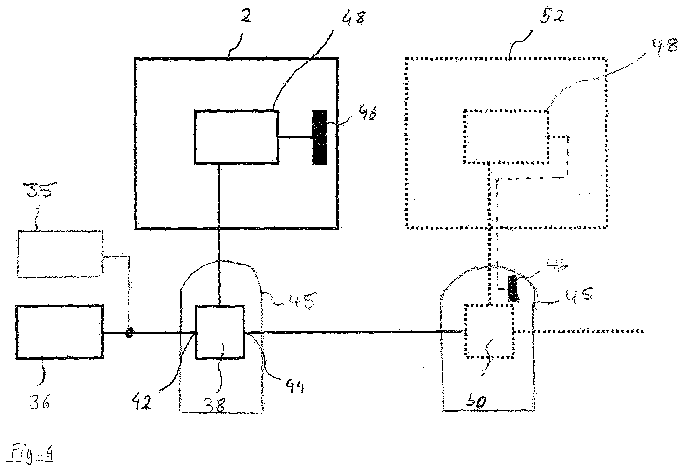

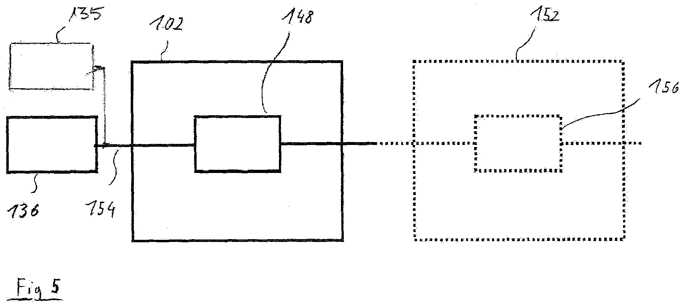

In den Fig.4 und Fig.5 sind verschiedene mögliche, schematische Schalteranordnungen dargestellt. Der Faserstrang in Fig.4 verbindet das OTDR-Messgerät 36, bzw. das redundante OTDR-Messgerät 35, über einen Strahlteiler 38 mit dem ersten Schalter 2. Der Strahlteiler 38 zweigt z.B. 3% der am Eingang 42 eintretenden Lichtmenge ab und leitet Sie an die Glasfaser des ersten Schalters 2 weiter. Die Menge des abgezweigten Lichts wird vorzugsweise so gewählt, dass die Biegung der Glasfaser durch die Auslenkvorrichtung 48 zuverlässig erkannt werden kann. Die in dem Schalter 2 angeordnete Glasfaser endet im Gehäuse und die Lichtmenge wird am Ende der Glasfaser mit einem Reflektor 46 reflektiert. Die Reflektion wird entweder durch einen 90° Schnitt der Glasfaser oder einen offenen PC-Verbinder (z.B. LC/PC-Stecker) erreicht oder durch einen offenen Stecker, der als Reflektor ausgelegt ist. Der Stecker kann sich sowohl im Schalter 2, eingeklemmt zwischen Lamellen 15, als auch in der Muffe 45 neben dem Strahlteiler 50 befinden. Dabei hat das Anbringen des Steckers in der Muffe 45 den Vorteil, dass der Stecker im Problemfall, ohne Öffnen des wasserdichten Schalters gewechselt werden kann.

Die verbleibenden 97% der Lichtmenge werden am Ausgang 44 an eine Glasfaser weitergegeben und können zum Auslesen weiterer Schalter verwendet werden. Analog zur Anordnung des ersten Strahlteilers 38 und des Schalters 2 kann der Faserstrang mit weiteren Strahlteilern und Schaltern (anhand der gestrichelten Darstellung eines Strahlteilers 50 und eines Schalters 52 in Fig.4 beispielhaft angedeutet) fortgesetzt werden, bis die Lichtmenge nicht mehr ausreicht um eine Auslösung der Schalter zuverlässig erkennen zu können.

Diese Anordnung hat gegenüber einer einfachen Reihenschaltung ohne Strahlteiler die folgenden Vorteile:
- schnellere Messung/Überprüfung der Schalterzustände [ca. 20 Sekunden für 50 Schalter] durch bessere Ausnutzung der vorhandenen Lichtmenge,
- keine Notwendigkeit der Entwicklung weiterer Software zur Korrektur der Messkurve bei auslösendem Schalter, und
- einfache Identifizierung des ausgelösten Schalters.
Die durch die Faserbiegung in einem Schalter ausgelöste Lichtdämpfung beeinflusst die Kontrolle der restlichen Schalter nicht.

Der Anschluss an die Muffe geschieht vorzugsweise über eine wasserdichte Verbindung [z.B. ein Flexrohr], welche eine biegeunempfindliche Glasfaser des Typs G657 enthält. Dadurch wird sichergestellt, dass beim Knicken des Faseranschlusses des Schalters zwischen Schalterausgang und Spleißkassette in der Muffe keine Fehldeutung des Schaltzustandes entstehen kann. Der Anschluss kann aber auch mittels einer Glasfaser des Typs G652 bzw. G655 oder jeder Glasfaser, welcher mit dem G652-Standard kompatibel ist, erfolgen.

Eine alternative Anordnung der Schalter 102, 152 entlang eines Faserstrangs ist schematisch in Fig.5 dargestellt. Die Glasfaser 154 verbindet das OTDR-Messgerät 136, bzw. das redundante OTDR-Messgerät 135, mit den Auslenkvorrichtungen 148 und 156 der jeweiligen Schalter 102, 152. Die Schalter 102 und 152 sind in Reihe geschaltet. Die Schalteranordnung kann durch die Anordnung weiterer Schalter entlang des Faserstrangs ergänzt werden, wie beispielhaft anhand des (gestrichelt dargestellten) Schalters 152 angedeutet.

### Zeichenerklärung:

- 2, 52, 102, 152: Schalter
- 4: Gehäuse
- 6: biegeunempfindliche Glasfaser
- 8: Klemme
- 10: biegeempfindliche Glasfaser
- 11: Krimpspleißschutz
- 12: Führungsleiste
- 14: Führungsnase
- 15: Lamellen
- 16: Mitnehmer
- 18 ,20: abgerundete Kante
- 22: Schraubfeder
- 24: Aufzughebel
- 26: Vorsprung
- 28: Hubstange
- 30: Achse
- 32: Schieber
- 34: Rückstellverzögerung
- 35, 135: redundantes OTDR-Messgerät
- 36, 136: OTDR-Messgerät
- 38, 50: Strahlteiler
- 42: Eingang des Strahlteilers
- 44: Ausgang des Strahlteilers
- 45: Muffe
- 46: Reflektor
- 48, 148, 156: Auslenkvorrichtung
- 154: Glasfaser

## Patentansprüche

1. Vorrichtung zum Detektieren eines Schaltvorgangs mit mindestens einer abfragbaren Schalteinrichtung, die mit einem optischen Faserstrang betrieblich gekoppelt ist, und mindestens einem mit dem optischen Faserstrang betrieblich gekoppelten OTDR-Messgerät,
wobei die mindestens eine abfragbare Schalteinrichtung folgende Merkmale umfasst:
• ein Gehäuse,
• einen in dem Gehäuse angeordneten optischen Leiter,
• eine in dem Gehäuse angeordnete Auslenkvorrichtung für den optischen Leiter, wobei die Auslenkvonichtung derart ausgestaltet ist, dass der optische Leiter bei Betätigung der Auslenkvorrichtung in einer definierten Art und Welse ausgelenkt wird so dass sich der Biegeradius des optischen Leiters definiert ändert,
• eine Auslösevorrichtung, die einen Schaltvorgang der Schalteinrichtung einleitet und die Auslenkvorrichtung zumindest zeitweise betätigt, und
• einen Rückstellmechanismus für die Auslenkvorrichtung, wobei der Rückstellmechanismus eine Rücksteliverzögerung aufweist, die die Auslenkvorrichtung nach dem Rückstellen der Auslösevorrichtung mit einer definierten Verzögerung in ihre Ausgangslage zurückführt
wobei der optische Leiter mittels eines Strahlteilers mit dem optischen Faserstrang gekoppelt ist, so dass ein Anteil einer in dem Faserstrang geführten Lichtmenge an dem Strahlteiler abgezweigt und an die Schalteinrichtung weitergeleitet wird, und
wobei zum Detektieren des Schaltvorgangs mittels des mindestens einen OTDR-Messgeräts eine durch die Auslenkung erhöhte Dämpfung in dem optischen Leiter detektiert wird.

2. Vorrichtung zum Delektieren eines Schaltvorgangs nach Anspruch 1, wobei der optische Leiter im Gehäuse von Führungselementen entlang einer kreisförmigen Bahn geführt wird, wobei die Auslenkvorrichtung einen Mitnehmer umfasst, welcher bei Betätigung der Auslenkvorrichtung, den optischen Leiter in eine definierte Richtung auslenkt, so dass der Biegeradius des optischen Leiters verändert wird.

3. Vorrichtung zum Detektieren eines Schaltvorgangs nach einem der vorherigen Ansprüche, wobei die Rücksieiiverzägerung als Uhrwerk oder als hydraulische Lamellenbremse ausgebildet ist.

4. Vorrichtung zum Detektieren eines Schaltvorgangs nach einem der vorherigen Ansprüche, wobei der im Gehäuse angeordnete optische Leiter entweder in das Gehäuse eintritt und das Gehäuse wieder verlässt oder nur in das Gehäuse eintritt und im Gehäuse endet.

5. Vorrichtung zum Detektieren eines Schaltvorgangs nach einem der vorherigen Ansprüche, wobei der im Gehäuse angeordnete optische Leiter mit einem LC/PC-Stecker oder einem als Reflektor ausgelegten Stecker endet.

6. Vorrichtung zum Detektieren eines Schaltvorgangs nach einem der vorherigen Ansprüche, weiterhin umfassend eine Einstelivorrichtung zum Einstellen des Biegeradius des optischen Leiters in der Auslenkstellung.

7. Vorrichtung zum Detektieren eines Schaltvorgangs nach einem der vorherigen Ansprüche, wobei mehrere abfragbare Schalteinrichtungen eines Faserstrangs betrieblich miteinander gekoppelt sind.

8. Vorrichtung nach Anspruch 7, wobei ein Antell der Lichtmenge des optischen Leiters eines Faserstrangs vor jeder Schalteinrichtung mit einem Strahlteiler abgezweigt und an die Schalteinrichtung weitergeleitet wird.

## Claims

1. A device for detecting a switching operation with at least one interrogatable switching device which is operationally coupled with an optical fibre strand, and with at least one OTDR measuring device operationally coupled with the optical fibre strand,
wherein the at least one interrogatable switching device comprises the following features:
• a housing,
• an optical conductor arranged in the housing,
• a deflecting device for the optical conductor arranged in the housing, wherein the deflecting device is configured such that the optical conductor is deflected in defined manner when the defecting device is actuated such that the bending radius of the optical conductor changes in defined manner,
• a triggering device which triggers a switching operation of the switching device and actuates the deflecting device at least temporarily, and
• a resetting mechanism for the deflecting device, wherein the resetting mechanism comprises a delay element which, after resetting of the triggering device, returns the deflecting device with a defined delay to the initial position thereof,
wherein the optical conductor is coupled by means of a beam splitter with the optical fibre strand, such that part of the light quantity guided in the fibre strand is branched off at the beam splitter and forwarded to the switching device, and
wherein, in order to detect the switching operation, increased damping due to deflection is detected in the optical conductor by means of the at least one OTDR measuring device.

2. A device for detecting a switching operation according to claim 1, wherein the optical conductor is guided within the housing along a circular track by guiding elements, wherein the deflecting device comprises a catch that deflects the optical conductor in a defined direction when the deflecting device is actuated such that the bending radius of the optical conductor is changed.

3. A device for detecting a switching operation according to either of the preceding claims, wherein the delay element takes the form of a clockwork or a hydraulic multi-disc brake.

4. A device for detecting a switching operation according to any of the preceding claims, wherein the optical conductor arranged in the housing either enters the housing and exits it again or only enters the housing and ends within the housing.

5. A device for detecting a switching operation according to any of the preceding claims, wherein the optical conductor arranged in the housing ends with an LC/PC plug or a plug designed as a reflector.

6. A device for detecting a switching operation according to any of the preceding claims, further comprising an adjusting device for adjusting the bending radius of the optical conductor in the deflection position.

7. A device for detecting a switching operation according to any of the preceding claims, wherein multiple interrogatable switching devices of a fibre strand are operationally coupled with each other.

8. A device according to claim 7, wherein a part of the light quantity of the optical conductor of a fibre strand is branched off upstream of each switching device with a beam splitter and forwarded to the switching device.

## Revendications

1. Dispositif destiné à détecter une opération de commutation comprenant au moins un moyen de commutation interrogeable qui est couplé fonctionnellement à un brin de fibre optique, et au moins un appareil de mesure OTDR couplé fonctionnellement au brin de fibre optique,
le au moins un moyen de commutation interrogeable comprenant les caracteristiques suivantes :
• un boîtier,
• un conducteur optique disposé dans le boîtier,
• un dispositif de déviation dispose dans le boîtier pour le conducteur optique, le dispositif de deviation etant configure de telle sorte que le conducteur optique est devié d'une manière definie lors de l'actionnement du dispositif de deviation, de sorte que le rayon de courbure du conducteur optique varie de façon definie,
• un dispositif de déclenchement qui initie une opération de commutation du moyen de commutation et qui actionne au moins par intermittence le dispositif de deviation, et
• un mécanisme de rappel pour le dispositif de deviation, le mecanisme de rappel presentant une temporisation de rappel qui ramene le dispositif de deviation dans sa position de départ avec une temporisation définie après le rappel du dispositif de déclenchement,
le conducteur optique étant couple au brin de fibre optique au moyen d'un diviseur de faisceau, de telle sorte qu'une part de la quantité de lumière guidee dans le brin de fibre est deviée au niveau du diviseur de faisceau et acheminée vers le moyen de commutation, et
pour détecter l'opération de commutation au moyen du au moins un appareil de mesure OTDR, une attenuation accrue par la deviation dans le conducteur optique est détectée.

2. Dispositif destiné à détecter une operation de commutation selon la revendication 1, le conducteur optique étant guidé dans le boîtier par des éléments de guidage le long d'une trajectoire circulaire, le dispositif de deviation comprenant un entraîneur qui dévie le conducteur optique dans une direction definie lors de l'actionnement du dispositif de déviation, modifiant ainsi le rayon de courbure du conducteur optique.

3. Dispositif destiné à détecter une opération de commutation selon l'une des revendications précédentes, la temporisation de rappel étant conçue sous forme de mouvement d'horlogerie ou sous forme de frein hydraulique à disques multiples.

4. Dispositif destiné à détecter une opération de commutation selon l'une des revendications précédentes, le conducteur optique disposé dans le boîtier soit entre dans le boîtier et quitte le boîtier soit entre dans le boîtier et se termine dans le boîtier.

5. Dispositif destine à détecter une operation de commutation selon l'une des revendications précédentes, le conducteur optique disposé dans le boîtier se terminant par un connecteur LC/PC ou un connecteur conçu comme reflecteur.

6. Dispositif destiné à détecter une opération de commutation selon l'une des revendications précédentes, comprenant en outre un dispositif de réglage pour régler le rayon de courbure du conducteur optique dans la position deviee.

7. Dispositif destine à détecter une operation de commutation selon l'une des revendications précédentes, plusieurs moyens de commutation interrogeables d'un brin de fibre étant couplés ensemble fonctionnellement.

8. Dispositif selon la revendication 7, une part de la quantité de lumiere du conducteur optique d'un brin de fibre étant déviée au moyen d'un diviseur de faisceau devant chaque moyen de commutation et acheminée vers le moyen de commutation.
